# EUROPÄISCHE PATENTSCHRIFT

(11) **EP 2 317 357 B1**
(45) Veröffentlichungstag und Bekanntmachung des Hinweises auf die Patenterteilung: **12.12.2012**
(21) Anmeldenummer: 10189361.8
(22) Anmeldetag: 29.10.2010
(51) Int. Cl.: G02B 6/44, H02G 3/06, F16L 19/04

(54) **Kupplung für Lichtwellenleiterrohre**
Coupling device for optical fibre ducts
Couplage pour conducteurs tubulaires à fibres optiques

(30) Priorität: 30.10.2009 CH 16672009
(43) Veröffentlichungstag der Anmeldung: 04.05.2011
(73) Patentinhaber: Elkuch, Roland, 9488 Schellenberg (LI)
(72) Erfinder: Elkuch, Roland, 9488 Schellenberg (LI)
(74) Vertreter: Hasler, Erich

(56) Entgegenhaltungen:
- EP-A1- 0 285 677
- DE-A1- 2 053 049
- DE-A1- 2 754 055
- US-A- 2 313 780
- US-A- 2 328 469
- US-A- 6 053 639

## Beschreibung

### Gebiet der Erfindung

Die vorliegende Erfindung betrifft eine Kupplung für Lichtwellenleiterrohre gemäss Oberbegriff des Anspruchs 1.

### Stand der Technik

Rohre, welche der Aufnahme von Lichtwellenleiter dienen, können aus montagetechnischen Gründen nicht im Endlosverfahren eingesetzt werden und müssen demnach an einander zugewandten Stirnseiten verbunden werden. Im Anschluss werden Lichtwellenleiter mit Drücken bis zu 16 bar in die miteinander verbundenen Rohre eingeblasen. Eine weitestgehend druckdichte Verbindung der Rohre ist daher unumgänglich.

Eine bekannte und in der Praxis häufig eingesetzte Kupplung besteht aus einer Vielzahl von Einzelteilen. Die Kupplung besitzt an ihren Stirnseiten jeweils eine Aufnahme für ein erstes und zweites Rohrende Die Kemaufgabe der Rohrklemmung ist von zwei sich an einem Kupplungsmittelteil gegenüberliegenden Metallringen übernommen, welche zentrisch in den Aufnahmen angeordnet sind. Der Innendurchmesser der Metallringe ist geringfügig kleiner als der Aussendurchmesser der zu verbindenden Rohrenden. Die Rohrenden sind daher reibschlüssig in den Aufnahmen gehalten. Ein Vorteil der Kupplung des Stands der Technik ist, dass Rohrstücke rasch durch einfaches stirnseitiges Eindrücken in die Kupplung miteinander verbindbar sind. Als nachteilig hat sich in der praktischen Anwendung herausgestellt, dass die vielen Einzelteile kompliziert zusammenzubauen sind. Zudem bedarf es eines erhöhten Kraftaufwands, die Metallringe mittels der Rohrenden zu durchstossen. Diese Art des Kraftschlusses zwischen den Metallringen und den Rohrenden ist nur mehr unter Zerstörung zu lösen. Ein weiterer Nachteil besteht darin, dass diese Kupplung nicht sortenrein entsorgt werden kann, da die Metallringe nicht aus der Kupplung entfernbar sind. Ferner ist bei dieser Bauform, selbst in transparenter Ausführung nicht klar ersichtlich, ob die Stirnseiten der Rohre auf Stoss in der Kupplung aufgenommen sind.

Die in der US 6,053,639 offenbarte Kupplung für Lichtwellenleiterrohre umfasst einen länglichen zylindrischen Körper mit zwei Stutzen mit einem Aussengewinde, Endkappen mit einem Innengewinde, welche auf die Stutzen aufschraubbar sind, einen Zentrier- und Dichtring, einen Haltering, ein Rohrhalteteil und einen Dichtring. Eine Dichtung zwischen dem Kupplungsstück und dem Lichtwellenleiterrohr kommt einerseits durch Stauchung des Dichtrings und andererseits durch Stauchung des Zentrier- und Dichtrings zustande. Das Rohrhalteteil wird durch die abgeschrägten Flächen der Endkappe radial zusammengedrückt, sodass sich Zähne, welche an der Mantelinnenseite des Rohrhalteteils ausgeformt sind, in das Rohr graben. Beim Aufschrauben der Endkappe wird das Lichtwellenleiterrohr axial in die Kupplung hinein verschoben, wodurch der Dichtring und der Zentrier- und Dichtring axial zusammengedrückt werden, sodass sich diese radial nach innen verformen. Diese Kupplung ist relativ kompliziert aufgebaut, da zur Abdichtung der Lichtwellenleiterrohre eine Vielzahl von Einzelteilen benötigt wird. Ferner besteht die Gefahr, dass bei einem Überdrehen der Endkappe der Dichtring und der Zentrier- und Dichtring beschädigt werden können.

In der US 2,328,469 ist eine Kupplungsvorrichtung für Rohre beschrieben. Die Kupplungsvorrichtung umfasst einen Rohrteil, auf welchen eine Nuss aufschraubbbar ist. Am Übergang vom Rohrteil zur Nuss ist ein Ring aufgenommen. Das erste und zweite Ende des Rings sind jeweils als ein Kegelstumpf ausgeformt. Zwischen dem ersten Ende des Rings und der Nuss ist ein Rohrende angeordnet, wobei das Rohrende auf das erste Ende des Rings aufgeschoben ist. Das zweite Ende des Rings ist in einer konischen Bohrung des Rohrteils aufgenommen. Wird die Nuss mit dem Rohrteil verschraubt, so wird einerseits das Rohrende zwischen dem Ring und der Nuss verklemmt und andererseits das zweite Ende des Rings in die konische Bohrung gepresst. Zur Verbesserung der Dichtigkeit zwischen dem Ring und dem Rohrteil besitzen das zweite Ende des Rings und die konische Bohrung unterschiedliche Öffnungswinkel.

Die DE 27 54 055 zeigt eine Rohrkupplung mit einem Kupplungskörper, welcher ein Aussengewinde aufweist, in den ein Ende eines Rohres einsetzbar ist. Auf das Aussengewinde ist eine Bauteile-Untergruppe aufschraubbar, welche aus einer Mutter, einer aus Metall gebildeten Klemmhülse, einer Gegenscheibe und einer das Herausdrücken verhindernden Scheibe aufgebaut ist. Durch einen Rückhaltering ist die Klemmhülse in der Mutter gehalten. In einer Aussparung zwischen dem Kupplungskörper und der das Herausdrücken verhindernden Scheibe ist ein O-Ring aufgenommen. Die Mutter ist im Inneren mit einer kegelstumpfförmigen Oberfläche versehen, welche mit einer kegelstumpfförmigen, komplementären Aussenoberfläche der Klemmhülse zusammenwirkt. Dadurch, dass die Klemmhülse in axialer Richtung gespalten ist, wird beim Festziehen der Mutter die Klemmhülse an die Rohraussenwand gedrückt. Durch Festziehen der Mutter wird der O-Ring deformiert, um das Ende des Rohrs gegenüber dem Kupplungskörper abzudichten. Bei der Rohrkupplung ist geringe Gefahr gegeben, dass selbige in der falschen Reihenfolge montiert wird, jedoch besteht sie aus einer Vielzahl von Einzelteilen und ist dementsprechend kompliziert aufgebaut. Ferner ist diese Rohrkupplung für den Einsatz im Bereich der Lichtwellenleitertechnik nicht erwünscht, da Metalle die Lichtwellenleitung störend beeinflussen können.

Der aus der US 2,313,780 bekannte Rohrverbinder besitzt ein längliches Basisteil, welches an seinen beiden Enden ein Aussengewinde aufweist. Ein Kupplungsteil, in welchem ein Rohr aufgenommen ist, wird mittels einer Überwurfmutter an die dem Rohrende zugewandte Stirnseite des Basisteils gedrückt. Zur dichtenden Wirkung zwischen dem Rohrverbinder und dem Rohr sind drei verschiedene Ausführungsformen des Kupplungsteils beschrieben. In der zweiten Ausführungsform ist das ausgeweitete Rohrende zwischen dem konisch ausgeweiteten Ende des Kupplungsteils und dem komplementär dazu ausgebildeten Ende des Basisteils klemmend gehalten. In der dritten Ausführungsform ist das Rohrende fest mit einem kreisringförmigen Fortsatz verbunden, dessen Aussendurchmesser grösser als der Aussendurchmesser des Rohres ist und der zwischen dem Basisteil und dem Kupplungsteil bei Festziehen der Überwurfmutter klemmend gehalten ist. Das Rohr ist für die dichtende Aufnahme in dem Rohrverbinder demnach vorzubearbeiten. Ferner ist das Kupplungsteil vor einer Überbelastung durch die Überwurfmutter nicht geschützt, da die Überwurfmutter ausschliesslich axial auf das Kupplungsteil wirkt.

In der EP 0 285 677 ist eine Klemmverbindung für Druckrohrleitungen offenbart, welche zwei Druckrohrleitungen mit einem rohrförmigen Anschlusskörper verbindet. Der Anschlusskörper besitzt an seinen Längsenden jeweils ein Aussengewinde, welches jeweils mit Innengewinden zweier Überwurfmuttern zusammenwirken kann. Ein Dichtring aus weichelastischem Material ist mittels der Überwurfmutter axial verschiebbar, um ihn gegen eine konisch nach innen verlaufende Stirnfläche des Anschlusskörpers zu drücken. Der Flansch der Überwurfmutter wirkt daher als Druckring auf den Dichtring. Zwischen dem Druckring und dem Dichtring ist ein metallischer Zwischenring vorgesehen. Der weichelastische Dichtring wird durch die axiale Verschiebung stark gestaucht. Ferner hat der Dichtring neben seiner dichtenden Wirkung zusätzlich das Herausziehen der Druckrohrleitung aus der Klemmverbindung zu vermeiden und muss dementsprechend komprimiert werden. Der weichelastische Dichtring läuft daher Gefahr, durch zu hohen Druck, welcher von der Überwurfmutter ausgeht, beschädigt zu werden.

### Aufgabe der Erfindung

Aufgabe der vorliegenden Erfindung ist es daher, eine Kupplung zu schaffen, die obere Nachteile nicht besitzt. Insbesondere ist es Ziel der Erfindung eine Kupplung vorzuschlagen, welche zwei Rohrenden rasch und zuverlässig durch das Zusammenwirken weniger Einzelteile miteinander verbindet und ebenfalls ein rasches zerstörungsfreies Lösen der Rohrkupplung erlaubt. Noch ein Ziel ist es, dass von der Kupplung eine möglichst grosse Klemmkraft auf die zwei Rohrenden wirkt.

### Beschreibung

Diese Aufgabe wird bei einer Kupplung für Lichtwellenleiterrohre gemäss Oberbegriff des Anspruchs 1 dadurch gelöst, dass das distale Ende des Klemmteils als Aussenkonus mit einer ersten Konizität ausgebildet ist, und das Befestigungsteil einen Innenkonus mit einer zweiten Konizität aufweist, wobei die zweite Konizität kleiner als die erste Konizität ist. Diese Konstruktionsmerkmale haben den Vorteil, dass durch das Zusammenwirken von Befestigungsteil und Klemmteil eine mit einfachen Mitteln erzeugte Klemmkraft von dem Klemmteil auf das in selbigem aufgenommene Rohrende wirkt. Durch die verschiedenen Konizitäten, kann durch eine geringe Längsverschiebung eine grosse Klemmkraft aufgebaut werden, da der Innenkonus des Befestigungsteils vom Aussenkonus des Klemmteils aufspreizbar ist, wenn sich das Klemmteil gegen das zu haltende Rohr abstützt. Ist das Befestigungsteil beispielsweise mittels einer Gewindeverbindung drehbar an dem Kupplungskörper festgelegt, so reicht bereits eine geringe Verdrehung des Befestigungsteils gegenüber dem Kupplungskörper aus, um eine grosse Klemmkraft zu erzeugen.

Die gesamte Kupplung besteht lediglich aus den beschriebenen Einzelteilen, welche mit Vorteil aus Kunststoff herstellbar sind. Dadurch ist sichergestellt, dass keinerlei metallische Einzelteile eingesetzt sind, welche einen unerwünschten Einfluss auf den Lichtwellenleiter haben könnte. Auch kann die Entsorgung einer solchen Kupplung sortenrein erfolgen. Denkbar ist es, dass zumindest der Kupplungskörper aus transparentem Kunststoff hergestellt ist. Dadurch ist jederzeit feststellbar, ob das Rohrende in der Aufnahme bündig festgestellt ist. Denkbar ist es, Kupplungen herzustellen, welche an jeden beliebigen Aussendurchmesser des Rohrendes adaptiert sind. Vorzugsweise sind erfindungsgemässe Kupplungen zur Aufnahme von den gängigsten Rohraussendurchmessern im Lichtwellenleiterbereich hergestellt, welche 5, 6, 8,10 bzw. 12 mm betragen.

Dadurch, dass das Klemmteil mit Vorteil axial an die Aufnahme anschliesst und radial zusammendrückbar ist, wird das Rohrende in der Aufnahme und dem Klemmteil zuerst zentriert, bevor es verklemmt wird.

Zweckmässigerweise ist das Klemmteil stirnseitig an die Aufnahme angeformt. Der Kupplungskörper und an dessen Stirnseiten anschliessende Klemmteile sind als ein Bauteil gebildet und können in einer einzigen Druckgussform hergestellt werden.

In einer bevorzugten Ausführungsform ist das Klemmteil als separates Teil ausgebildet. Das Klemmteil kann in diesem Fall aus einem anderen Material wie der Kupplungskörper hergestellt sein. Beispielsweise kann ein Kunststoff mit hohem Reibungskoeffizient zur Anwendung kommen, wodurch die Rohrenden zuverlässig in den Aufnahmen festgestellt sind. Dadurch ist zusätzlich ermöglicht, dass zwischen der Stirnseite des Kupplungsteils und dem proximalen Ende des Klemmteils ein Dichtungsring, beispielsweise ein O-Ring aufnehmbar ist.

Als vorteilhaft erweist es sich, wenn das Klemmteil einen sich axial erstreckenden Klemmabschnitt aufweist, dessen Aussenabmessungen mindestens bereichsweise geringfügig grösser sind als die Innenabmessungen des Befestigungsteils. Durch diese aufeinander speziell angepassten Abmessungen wird durch Axialverschiebung des Befestigungsteils der Klemmabschnitt mit grosser Kraft zusammengedrückt.

Das Klemmteil ist vorteilhaft im Wesentlichen formschlüssig im Befestigungsteil aufnehmbar. Die Klemmwirkung des Klemmteils auf das Rohrende ist dadurch durch eine geringe Längsverschiebung des Befestigungsteils relativ zum Klemmteil entlang der Längsachse von 5 mm, bevorzugt von 3 mm und besonders bevorzugt von 2 mm erzeugt. Die Klemmwirkung ist durch eine Verschiebung des Klemmteils in radialer, normal zur Manteloberfläche des Rohrendes gerichteten Richtung erzeugt, wobei die Verschiebung 0,5 mm, bevorzugt 0,3 mm und besonders bevorzugt 0,2 mm beträgt.

Damit das distale Ende des Klemmteils leicht zusammendrückbar ist, weist selbiges zweckmässigerweise axial verlaufende Aussparungen auf.

Mit Vorteil ist die Innenwandung des Klemmteils mit einer Rillenstruktur mit Erhebungen versehen. Die Klemmwirkung auf das Rohr wird dadurch zusätzlich verstärkt.

In einer bevorzugten Ausführungsform sind die Erhebungen sägezahnartig ausgebildet. Dieses Konstruktionsmerkmal verbessert die Auszugssicherheit des Rohrendes in dem Klemmteil.

Damit das Befestigungsteil zuverlässig am Kupplungskörper gehalten ist, ist zwischen dem Befestigungsteil und dem Kupplungskörper vorteilhaft eine form- und/oder kraftschlüssige Verbindung ausgebildet.

Damit die Verbindung beliebig oft zu schliessen und zu öffnen ist, ist die Verbindung als Bajonettverschluss ausgebildet.

Mit Vorteil ist am proximalen Ende des Klemmteils im Durchgang ein Ringabsatz ausgebildet, welcher der Aufnahme eines O-Rings dient. Der O-Ring dichtet den Übergang zwischen dem Klemmteil und dem Kupplungskörper bis zu 16 bar.

Zweckmässigerweise ist am Anschlussstutzen in Abstand von der Stirnseite eine umlaufende Erhebung ausgebildet, an welcher das Klemmteil mit der Stirnseite anliegen kann, wobei der Anschlussstutzen mit einem Randabschnitt in den Durchgang des Klemmteils eingreift. Das Klemmteil ist dadurch zwangsläufig auf dem Anschlussstutzen zentriert angeordnet. Ferner ist das Klemmteil an dem Anschlussstutzen stabil abgestützt, während die Kupplung geschlossen ist. Die Kraft, welche von dem Befestigungsteil auf das Klemmteil wirkt, steht so zur Gänze des Rohrendes zur Verfügung.

Vorteilhaft ist das Befestigungsteil, in welchem das Klemmteil aufgenommen ist, an dem Anschlussstutzen vormontiert. Dies ist dadurch verwirklicht, dass am proximalen Ende des Befestigungsteils eine Mehrzahl von Vorsprüngen vorgesehen sind, mit welchen das Befestigungsteil an der umlaufenden Erhebung des Anschlussstutzens gehalten ist und nur unter Zerstörung von dem Anschlussstutzen lösbar ist. Dadurch, dass die Einzelteile vormontiert sind, können sie vom Anwender nicht verloren werden. Zudem müssen die Kupplungen während der Anwendung nur mehr geschlossen werden, ein vorgängiger Zusammenbau erübrigt sich.

Im Folgenden wird die Erfindung unter Bezugnahme auf die nicht massstabsgetreuen, schematischen Darstellungen näher erläutert. Es zeigen:
- Figur 1: ein Ausführungsbeispiel einer erfindungsgemässen Kupplung für Lichtwellenleiterrohre mit beidseitig eingesetzten Rohrabschnitten in einer Seitenansicht, wobei auf der linken Seite der Figur das Rohr noch nicht geklemmt ist;
- Figur 2: die Kupplung von Fig. 1 bestehend aus einem Kupplungskörper, einer Klemmhülse und einem Befestigungsteil im Längsschnitt entlang der Linie 2-2 von Fig. 1;
- Figur 3: einen Schnitt entlang der Linie 3-3 von Figur 2;
- Figur 4: einen Schnitt entlang der Linie 4-4 von Figur 2;
- Figur 5: die Kupplung von Figur 1 in perspektivischer Ansicht;
- Figur 6: den Kupplungskörper in perspektivischer Ansicht;
- Figur 7: das Befestigungsteil in perspektivischer Ansicht;
- Figur 8: das Klemmteil mit gerillter Innenoberfläche in perspektivischer Ansicht und
- Figur 9: das Klemmteil im Längsschnitt.

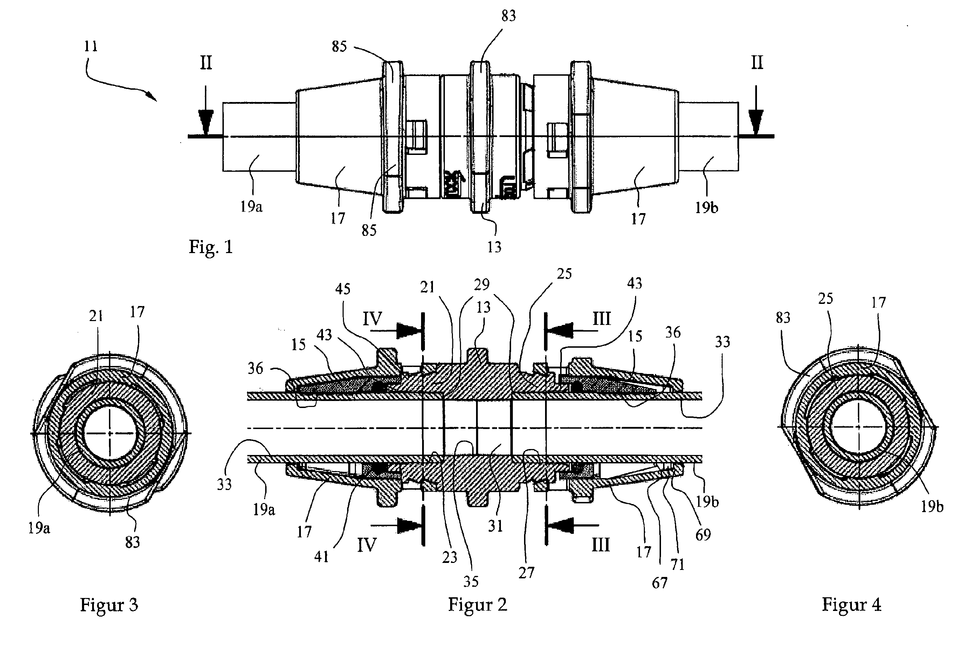

Die Figuren 1 bis 9 zeigen ein Ausführungsbeispiel einer erfindungsgemässen Kupplung 11, dessen wesentliche Bestandteile ein zentraler Kupplungskörper 13, ein Klemmteil 15 und ein Befestigungsteil 17 sind. Die Kupplung 11 erlaubt die Verbindung von Lichtwellenleiterrohren 19a, 19b, welche der Aufnahme eines Lichtleiters dienen.

Aus den Figuren 1 und 2 ist ersichtlich, dass der Kupplungskörper 13 einen ersten Anschlussstutzen 21 mit einer ersten stirnseitigen Aufnahme 23 für ein erstes Rohrende 19a und einen zweiten Anschlussstutzen 25 mit einer zweiten stirnseitigen Aufnahme 27 für ein zweites Rohrende 19b besitzt. Die Aufnahmen 23,27 sind kreiszylindrische Ausnehmungen mit einem Innendurchmesser, welcher nur geringfügig grösser als der Aussendurchmesser des aufzunehmenden Lichtwellenleiterrohres ist. Die Aufnahmen 23,27 sind jeweils begrenzt durch einen Ringabsatz 29, welcher einen Anschlag für die Stirnseite der Rohrenden 19a,19b darstellt. Die beiden Anschlussstutzen 21,25 sind über einen zylindrischen Durchlass 31, welcher an die Ringabsätze 29 anschliesst, miteinander verbunden. Der Durchmesser des Durchlasses 31 entspricht dabei vorzugsweise exakt dem Innendurchmesser der Rohre 19a,19b, sodass die Innenwandung 33 der Rohre 19a,19b mit der Innenwandung 35 des Kanalabschnitts 31 fluchten und ein nahtloser Übergang realisiert ist.

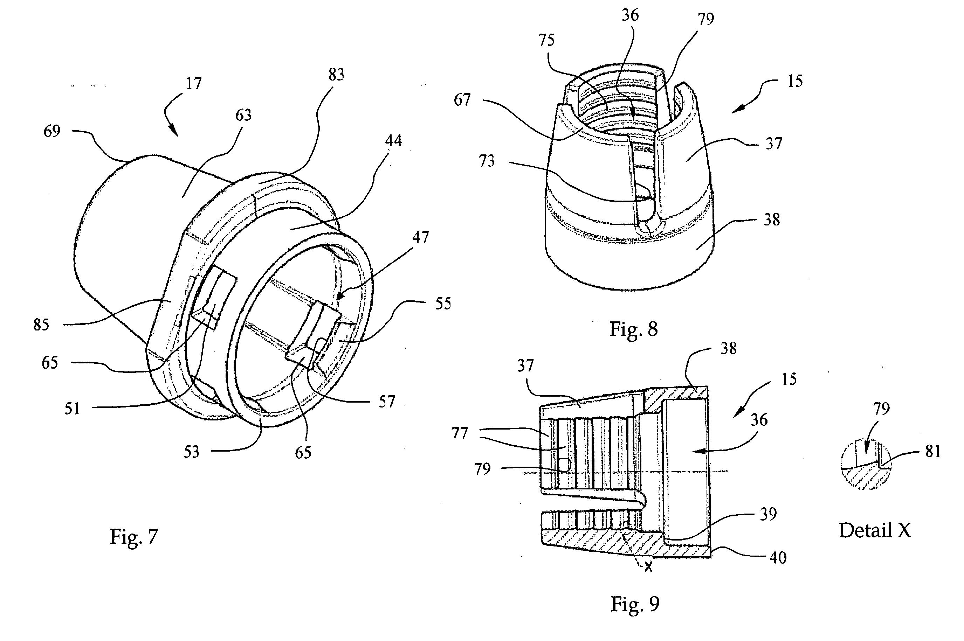

Figur 8 zeigt, dass das Klemmteil 15 als Spann- resp. Klemmhülse mit einem Durchgang 36 für ein zu kuppelndes Lichtwellenleiterrohr ausgebildet ist. Das distale Ende des Klemmteils 15 hat einen konischen Endabschnitt 37 mit einer bestimmten ersten Konizität. Der konische Endabschnitt 37 schliesst an einen kreiszylindrischen Abschnitt 38 an. Im Abstand von der proximalen Stirnkante 40 ist innen im Klemmteil 15 ein Ringabsatz 39 ausgebildet, an welchem ein Dichtungsring 41 anliegen kann. Der Dichtungsring 41 hat einen Inndurchmesser, welcher geringfügig kleiner ist als der Aussendurchmesser der Rohre 19a,19b, sodass der Dichtungsring 41 bei eingesetzten Rohren 19a,19b satt an deren Aussenwandung anliegt. Im zusammengesetzten Zustand ist zwischen dem Ringabsatz 39 und der Stirnkante 42 des Randabschnitts 43 ein Abstand vorgesehen. Der Dichtungsrings 41 ist so dimensioniert, dass dessen Stärke geringfügig grösser ist als obiger Abstand. Der Dichtungsring 41 erzeugt demnach im zusammengesetzten Zustand der Kupplung einen dichtenden Sitz zwischen dem Klemmteil 15, dem Kupplungskörper 13 und den eingesetzten Rohren 19a,19b.

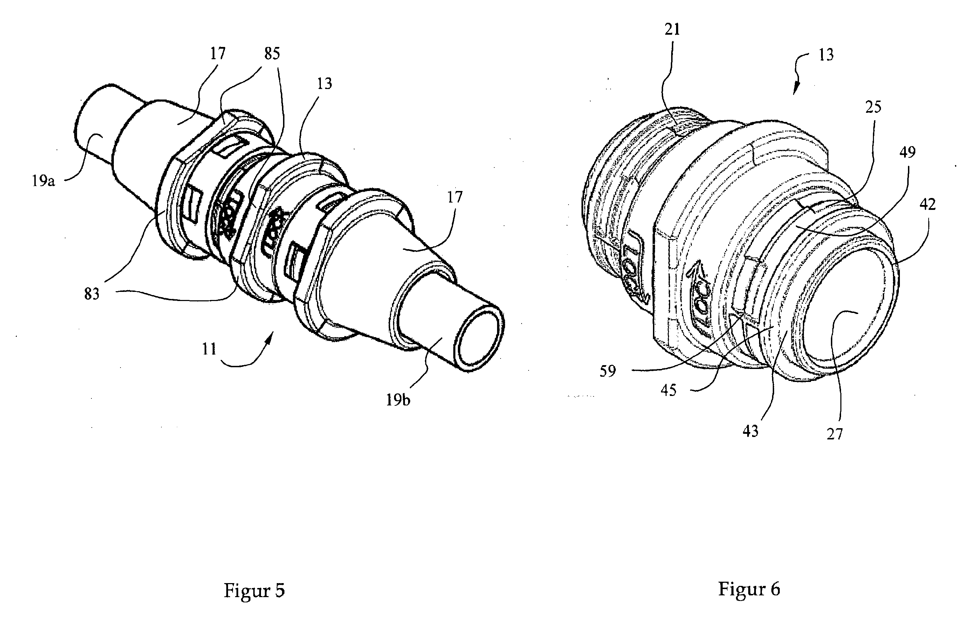

Wie weiter aus den Figur 2 und 6 hervorgeht, besitzen die Anschlussstutzen 21,25 jeweils einen kreiszylindrischen Randabschnitt 43, an welchen eine umlaufende ringförmige Erhebung 45 anschliesst. Im montierten Zustand liegt die Stirnkante 40 des Klemmteils 15 an der ringförmigen Erhebung 45 an, und der Anschlussstutzen 21 resp. 25 greift mit dem Randabschnitt 43 in das Klemmteil 17 ein. Durch diese Ausgestaltung ist einerseits eine exakte gegenseitige Ausrichtung von Kupplungskörper 13 und Klemmteil 17 und andererseits eine gute Abdichtung des Kupplungsinneren gegenüber der Umgebung erreicht.

Zur Fixierung des Klemmteils 15 am Kupplungskörper 13 dient das Befestigungsteil 17, welches die Gestalt einer Kappe hat (detailliert in Figur 7 dargestellt). Dieses umgreift das Klemmteil 15und ist an den Anschlussstutzen 21,25 mittels eines Bajonettverschlusses 47 lösbar befestigbar. Der Bajonettverschluss 47 ist gebildet durch mehrere am Anschlussstutzen 21,25 vorgesehene Rastnasen 49, welche in gleichmässigen Abständen voneinander auf einer Kreisbahn über den Umfang verteilt sind. Die Rastnasen 49 befinden sich in einem Abstand zur ringförmigen Erhebung 45. Die Rastnasen 49 können in Ausnehmungen 51 einrasten, welche ebenfalls in gleichmässigen Abständen voneinander im Randabschnitt 44 des Befestigungsteils 17 vorgesehen sind. Zwischen den Ausnehmungen 51und der proximalen Stirnkante 53 sind nach innen ragende keilförmige Vorsprünge 55 ausgebildet. Die Vorsprünge 55 erleichtern durch ihre keilförmige Gestalt das Aufsetzen des Befestigungsteils auf den Kupplungskörper 13. Durch eine an den Vorsprüngen 55 ausgebildete Hinterschneidung 57, welche bei aufgesetztem Befestigungsteil 17 an der ringförmigen Erhebung 45 anliegt, ist ein Abziehen des Befestigungsteils 17 weitgehend verunmöglicht. Das heisst, dass der Durchmesser eines an den Vorsprüngen 51 anliegenden, kleinsten Kreises geringfügig kleiner als der Aussendurchmesser der ringförmigen Erhebung 45 ist. Ein einmal auf den Anschlussstutzen 21 oder 25 aufgesetztes Befestigungsteil 17 ist somit durch Formschluss am Kupplungskörper 13 gehalten.

Um eine Verdrehung von Befestigungsteil 17 und Kupplungskörper 13 zu verhindern, sind axial verlaufende Rippen 59 vorgesehen. Im Falle von 4 Rastnasen und Ausnehmungen können beispielsweise zwei oder vier axiale Rippen vorgesehen sein. Da die Rastnasen 49 und Vorsprünge 55 sich jeweils über ein Segment von 90 Grad erstrecken, ist bei Vorhandensein von vier gleichmässig über den Umfang verteilten Rippen 59 die relative Ausrichtung Befestigungsteil 17 und Kupplungskörper 13 in Drehrichtung gegeben, d.h. das Befestigungsteil kann nur noch axial in Richtung zur Kupplungsmitte hin verschoben werden. Zum Verriegeln des Bajonettverschlusses müssen daher Befestigungsteil 17 und Kupplungskörper 13 zuerst zusammen geschoben und dann relativ zueinander verdreht werden (vorliegend um 90 Grad). Wegen entsprechender Anordnung der axialen Rippen 59 kann der Bajonettverschluss nur durch eine Drehung im Uhrzeigersinne verriegelt werden.

Um ein Lösen des Bajonettverschlusses zu ermöglichen, ist eine Seitenkante der Ausnehmung 51 als eine Rampe 65 ausgebildet (Fig. 7).

Analog zum Klemmteil 15 besitzt auch das Befestigungsteil 17 einen distalen konischen Abschnitt 63 und einen proximalen kreiszylindrischen Abschnitt, welcher durch den Randabschnitt 44 gebildet ist. Der konische Abschnitt 63 besitzt eine zweite Konizität, welche kleiner ist als die erste Konizität des Endabschnitts 37. Im Ausgangszustand, d.h. wenn noch keine Klemmwirkung auf das Rohr 19 ausgeübt ist, ist der konische Endabschnitt 37 des Klemmteils 15 erst teilweise im konischen Abschnitt 63 des Befestigungsteils 17 aufgenommen (Fig. 2, rechte Seite). Es ist erkennbar, dass zwischen dem distalen Ende 67 des Klemmteils 15 und der distalen Stirnwand 69 des Befestigungsteils 17 noch ein Freiraum 71 ist. Durch die unterschiedlichen Konizitäten des konischen Endabschnitts 37 des Klemmteils 15 und dem konischen Abschnitt 63 des Befestigungsteils 17 ist der konische Abschnitt 63 vom konischen Abschnitt 37 aufspreizbar, was zu der erwünschten verstärkten Klemmwirkung auf das Klemmteil 15 führt.

Werden Befestigungsteil 17 und Kupplungskörper 13 relativ zueinander verdreht, schliesst sich der Verschluss, und das Befestigungsteil 17 wird über das Klemmteil 15 geschoben. Dabei drückt der konische Abschnitt 63 auf den konischen Endabschnitt 37 und klemmt somit ein im Durchgang 36 aufgenommenes Rohr 19 ein. Damit der konische Endabschnitt 37 möglichst leicht zusammendrückbar ist, sind vom distalen Ende 67 her axial verlaufende Aussparungen 73 vorgesehen, welche sich vorzugsweise über den ganzen konischen Abschnitt 37 erstrecken. Um nicht nur eine Reibschluss- sondern auch eine Formschlussverbindung zwischen den Rohrenden 19a, 19b und dem Klemmteil 15 zu realisieren, ist an der Innenwandung 75 des Klemmteils 15 eine Rillenstruktur 77 mit Erhebungen 79 vorgesehen. Die Erhebungen 79 haben im Querschnitt die Gestalt eines Sägezahns (Fig. 9). Dabei ist die steile Flanke 81 einer Erhebung 79 zur proximalen Seite orientiert. Denkbar ist, anstelle einer Rillenstruktur 77 eine andere Art von Oberflächenstruktur einzusetzen.

Um den Kupplungskörper 13 und das Befestigungsteil 17 besser anfassen und verdrehen zu können, sind an jedem Teil Montageringe 83 mit Abflachungen 85 vorgesehen. Anhand der relativen Ausrichtung der Abflachungen 85 lässt sich visuell leicht der Montagezustand feststellen, d.h. ob die Kupplung verriegelt ist oder nicht.

### Legende:

- 11: Kupplung
- 13: Kupplungskörper
- 15: Klemmteil
- 17: Befestigungsteil
- 19a, 19b: Lichtwellenleiterrohr
- 21: erster Anschlussstutzen
- 23: erste Aufnahme
- 25: zweiter Anschlussstutzen
- 27: zweite Aufnahme
- 29: Ringabsatz
- 31: Durchlass
- 33: Innenwandung der Rohre 19a,19b
- 35: Innenwandung des Durchgangs 31
- 36: Durchgang für Rohr im Klemmteil
- 37: konischer Endabschnitt des Klemmteils
- 38: kreiszylindrischer Abschnitt des Klemmteils
- 39: Ringabsatz
- 40: proximale Stirnkante
- 41: Dichtungsring
- 42: Stirnkante am Randabschnitt 43
- 43: Randabschnitt am Kupplungskörper
- 44: Randabschnitt am Befestigungsteil
- 45: ringförmige Erhebung
- 47: Bajonettverschluss
- 49: Rastnasen
- 51: Ausnehmungen
- 53: Stirnkante
- 55: Vorsprünge
- 57: Hinterschneidung
- 59: Rippe
- 63: konischer Abschnitt des Befestigungsteils
- 65: Rampe
- 67: distale Stirnwand des Klemmteils
- 69: distales Ende des Befestigungsteils
- 71: Freiraum
- 73: Aussparungen im Klemmteile
- 75: Innenwandung
- 77: Rillenstruktur
- 79: Erhebungen der Rillenstruktur
- 81: steile Flanke einer Erhebung
- 83: Montagering
- 85: Abflachungen

## Patentansprüche

1. Kupplung (11) für Lichtwellenleiterrohre, mit einem Kupplungskörper (13) mit
- einem ersten Anschlussstutzen (21) mit einer ersten stirnseitigen Aufnahme (23) für ein erstes Rohrende (19a);
- einem koaxial zum ersten Anschlussstutzen (21) angeordneten zweiten Anschlussstutzen (25) mit einer zweiten stirnseitigen Aufnahme (27) für ein zweites Rohrende (19b); und
- Haltemitteln, welche auf das erste und zweite Rohrende (19a, 19b) aufsetzbar sind und durch
- wenigstens ein einen axialen Durchgang für ein Rohr aufweisendes Klemmteil (15) und
- wenigstens ein Befestigungsteil (17), welches über das Klemmteil (15) schiebbar ist, um die Rohrenden in den Aufnahmen festzustellen, gebildet sind
**dadurch gekennzeichnet, dass**
das distale Ende (37) des Klemmteils (15) als Aussenkonus mit einer ersten Konizität ausgebildet ist, und das Befestigungsteil (17) einen Innenkonus mit einer zweiten Konizität aufweist, wobei die zweite Konizität kleiner als die erste Konizität ist, wodurch das Klemmteil (15) und das Befestigungsteil (17) derart zusammenwirken, dass eine Klemmkraft von dem Klemmteil (15) auf das in dem Klemmteil (15) aufgenommene Rohrende (19a,19b) wirken kann.

2. Kupplung (11) nach Anspruch 1, **dadurch gekennzeichnet, dass** das Klemmteil (15) axial an die Aufnahme (23,25) anschliesst und radial zusammendrückbar ist, wodurch von dem Klemmteil (15) eine im Wesentlichen radiale Kraft auf das jeweilige Rohrende (19a,19b) wirken kann.

3. Kupplung (11) nach einem der Ansprüche 1 oder 2, **dadurch gekennzeichnet, dass** der Kupplungskörper (13), das wenigstens eine Klemmteil (15) und das wenigstens eine Befestigungsteil (17) aus Kunststoff hergestellt sind.

4. Kupplung (11) nach einem der Ansprüche 1 bis 3, **dadurch gekennzeichnet, dass** das Klemmteil (15) stirnseitig an die Aufnahme (23,25) angeformt ist.

5. Kupplung (11) nach einem der Ansprüche 1 bis 4, **dadurch gekennzeichnet, dass** das Klemmteil (15) als separates Teil ausgebildet ist.

6. Kupplung (11) nach einem der Ansprüche 1 bis 5, **dadurch gekennzeichnet, dass** das Klemmteil (15) im Wesentlichen formschlüssig im Befestigungsteil (17) aufnehmbar ist.

7. Kupplung (11) nach Anspruch 6, **dadurch gekennzeichnet, dass** das distale Ende (37) des Klemmteils (15) axial verlaufende Aussparungen (73) aufweist.

8. Kupplung (11) nach einem der Ansprüche 1 bis 7, **dadurch gekennzeichnet, dass** die Innenwandung des Klemmteils (15) mit einer Rillenstruktur (77) mit Erhebungen (79) versehen ist.

9. Kupplung (11) nach einem der Ansprüche 1 bis 8, **dadurch gekennzeichnet, dass** zwischen dem Befestigungsteil (17) und dem Kupplungskörper (13) eine form- und/oder kraftschlüssige Verbindung ausgebildet ist.

10. Kupplung (11) nach Anspruch 9, **dadurch gekennzeichnet, dass** die Verbindung als Bajonettverschluss ausgebildet ist.

11. Kupplung (11) nach einem der Ansprüche 1 bis 10, **dadurch gekennzeichnet, dass** am proximalen Ende (38) des Klemmteils (15) im Durchgang (36) ein Ringabsatz ausgebildet ist.

12. Kupplung (11) nach Anspruch 11, **dadurch gekennzeichnet, dass** der Ringabsatz der Aufnahme eines Dichtungsrings (41) dient.

13. Kupplung (11) nach einem der Ansprüche 1 bis 12, **dadurch gekennzeichnet, dass** am Anschlussstutzen (21,25) in Abstand von der Stirnseite eine umlaufende Erhebung (45) ausgebildet ist, an welcher das Klemmteil (15) mit der Stirnseite (40) anliegen kann, wobei der Anschlussstutzen (21,25) mit einem Randabschnitt (44) in den Durchgang (36) des Klemmteils (15) eingreift.

14. Kupplung (11) nach einem der Ansprüche 1 bis 13, **dadurch gekennzeichnet, dass** das Befestigungsteil (17), in welchem das Klemmteil (15) aufgenommen ist, an dem Anschlussstutzen (21,25) vormontiert ist, indem am proximalen Ende des Befestigungsteils eine Mehrzahl von Vorsprüngen (55) vorgesehen sind, mit welchen das Befestigungsteil an der umlaufenden Erhebung (45) des Anschlussstutzens (21,25) gehalten ist und nur unter Zerstörung von dem Anschlussstutzen (21,25) lösbar ist.

## Claims

1. Coupling (11) for optical waveguide tubes with a coupling body (13) with
- a first connecting branch (21) with a first front seat (23) for a first tube end (19a);
- a second connecting branch (25) placed coaxially to the first connecting branch (21) with a second front seat (27) for a second tube end (19b) and
- support means which can be placed on the first and on the second tube end (19a, 19b) and which are formed by
- at least one clamping part (15) which has an axial passage for a tube and
- at least one fixing part (17) that can be pushed over the clamping part (15) in order to lock the tube ends in the seats,
**characterized in that**
the distal end (37) of the clamping part (15) is configured as an outer cone with a first conicality and the fixing part (17) has an inner cone with a second conicality, whereby the second conicality is lower than the first conicality so that the clamping part (15) and the fixing part (17) cooperate in such a manner that a clamping power can act from the clamping part (15) to the tube end (19a, 19b) contained in the clamping part (15).

2. Coupling (11) according to claim 1, **characterized in that** the clamping part (15) is axially connected to the seat (23, 25) and can be compressed radially so that a substantially radial force can act from the clamping part (15) to the respective tube end (19a, 19b).

3. Coupling (11) according to any of the claims 1 or 2, **characterized in that** the coupling body (13), the at least one clamping part (15) and the at least one fixing part (17) are made of plastics.

4. Coupling (11) according to any of the claims 1 to 3, **characterized in that** the clamping part (15) is moulded to the seat (23, 25) on the front side.

5. Coupling (11) according to any of the claims 1 to 4, **characterized in that** the clamping part (15) is configured as a separate part.

6. Coupling (11) according to any of the claims 1 to 5, **characterized in that** the clamping part (15) can be received substantially positively fitting in the fixing part (17).

7. Coupling (11) according to claim 6, **characterized in that** the distal end (37) of the clamping part (15) has axially running recesses (73).

8. Coupling (11) according to any of the claims 1 to 7, **characterized in that** the inner wall of the clamping part (15) is provided with a groove structure (77) with elevations (79).

9. Coupling (11) according to any of the claims 1 to 8, **characterized in that** a positive and/or non-positivejunction is configured between the fixing part (17) and the coupling body (13).

10. Coupling (11) according to claim 9, **characterized in that** the junction is configured as a bayonet catch.

11. Coupling (11) according to any of the claims 1 to 10, **characterized in that** an annular shoulder is configured at the proximal end (38) of the clamping part (15) in the passage (36).

12. Coupling (11) according to claim 11, **characterized in that** the annular shoulder serves as a seat for a packing ring (41).

13. Coupling (11) according to any of the claims 1 to 12, **characterized in that** a peripheral elevation (45), on which the clamping part (15) can bear with the front side (40), is configured on the connecting branch (21, 25) by being spaced from the front side, whereby the connecting branch (21, 25) engages with an edge section (44) into the passage (36) of the clamping part (15).

14. Coupling (11)according to any of the claims 1 to 13, **characterized in that** the fixing part (17) in which the clamping part (15) is received is preassembled on the connecting branch (21, 25) while a multitude of projecting parts (55) are provided with which the fixing part is held on the peripheral elevation (45) of the connecting branch (21, 25) and can be released from the connecting branch (21, 25) by destroying.

## Revendications

1. Dispositif de couplage (11) pour tubes guides d'ondes optiques avec un corps de couplage (13) avec
- un premier raccord (21) avec un premier logement frontal (23) pour une première extrémité de tube (19a) ;
- un second raccord (25) placé coaxial par rapport au premier raccord (21) avec un second logement frontal (27) pour une seconde extrémité de tube (19b) et
- des moyens de support qui peuvent être posés sur la première et la seconde extrémité de tuyau (19a, 19b) et qui sont formés par
- au moins une pièce de serrage (15) qui présente un passage axial pour un tube et
- au moins une pièce de fixation (17), qui peut être enfilée sur la pièce de serrage (15), pour arrêter les extrémités de tube dans les logements,
**caractérisé en ce que**
l'extrémité distale (37) de la pièce de serrage (15) est configurée comme un cône extérieur avec une première conicité et la pièce de fixation (17) présente un cône intérieur avec une seconde conicité, la seconde conicité étant inférieure à la première conicité si bien que la pièce de serrage (15) et la pièce de fixation (17) coopèrent de telle manière qu'une force de serragepeut agir de la pièce de serrage (15) sur l'extrémité de tube (19a, 19b) logée dans la pièce de serrage (15).

2. Dispositif de couplage (11) selon la revendication 1, **caractérisé en ce que** la pièce de serrage (15) est rattachée axialement au logement (23, 25) et peut être comprimée dans le sens radial si bien qu'une force substantiellement radiale peut agir de la pièce de serrage (15) sur l'extrémité de tube respective (19a, 19b).

3. Dispositif de couplage (11) selon l'une des revendications 1 ou 2, **caractérisé en ce que** le corps de couplage (13), la pièce de serrage qui existe au moins (15) et la pièce de fixation qui existe au moins (17) sont fabriqués en matière plastique.

4. Dispositif de couplage (11) selon l'une des revendications 1 à 3, **caractérisé en ce que** la pièce de serrage (15) est moulée sur le côté frontal sur le logement (23, 25).

5. Dispositif de couplage (11) selon l'une des revendications 1 à 4, **caractérisé en ce que** la pièce de serrage (15) est configurée comme une pièce séparée.

6. Dispositif de couplage (11) selon l'une des revendications 1 à 5, **caractérisé en ce que** la pièce de serrage (15) peut être logée de manière substantiellement crabotée dans la pièce de fixation (17).

7. Dispositif de couplage (11) selon la revendication 6, **caractérisé en ce que** l'extrémité distale (37) de la pièce de serrage (15) présente des évidements orientés dans le sens axial (73).

8. Dispositif de couplage (11) selon l'une des revendications 1 à 7, **caractérisé en ce que** la paroi intérieure de la pièce de serrage (15) est pourvue d'une structure de rainures (77) avec des rehaussements (79).

9. Dispositif de couplage (11) selon l'une des revendications 1 à 8, **caractérisé en ce qu'**une jonction crabotée et/ou par force est configurée entre la pièce de fixation (17) et le corps de couplage (13).

10. Dispositif de couplage (11) selon la revendication 9, **caractérisé en ce que** la jonction est configurée comme une fermeture à baïonnette.

11. Dispositif de couplage (11) selon l'une des revendications 1 à 10, **caractérisé en ce qu'**un épaulement annulaire est configuré à l'extrémité proximale (38) de la pièce de serrage (15) dans le passage (36).

12. Dispositif de couplage (11) selon la revendication 11, **caractérisé en ce que** l'épaulement annulaire sert au logement d'une bague d'étanchéité (41).

13. Dispositif de couplage (11) selon l'une des revendications 1 à 12, **caractérisé en ce qu'**un rehaussement périphérique (45), sur lequel la pièce de serrage (15) peut reposer avec le côté frontal (40), est configuré sur le raccord (21, 25) en étant espacé du côté frontal, le raccord (21, 25) s'engrenant avec une section marginale (44) dans le passage (36) de la pièce de serrage (15).

14. Dispositif de couplage (11) selon l'une des revendications 1 à 13, **caractérisé en ce que** la pièce de fixation (17) dans laquelle la pièce de serrage (15) est logée est préassembléesur le raccord (21, 25), cependant qu'une multitude de saillies (55) est prévue à l'extrémité proximale de la pièce de fixation, saillies avec lesquelles la pièce de fixation est maintenue sur le rehaussement périphérique (45) du raccord (21, 25) et ne peut être détachée qu'en détruisant le raccord (21, 25).
